# FASCICULE DE BREVET EUROPEEN

(11) **EP 0 832 495 B1**
(45) Date de publication et mention de la délivrance du brevet: **20.01.1999**
(21) Numéro de dépôt: 96922105.0
(22) Date de dépôt: 12.06.1996
(51) Int. Cl.: H01H 25/00, B60N 2/02

(54) **DISPOSITIF DE REGLAGE DE POSITIONNEMENT D'UN SIEGE MOTORISE**
VORRICHTUNG ZUR EINSTELLUNG DER POSITION FÜR EINEN MOTORISCH VERSTELLBAREN SITZ
POWER SEAT POSITION ADJUSTMENT DEVICE

(30) Priorité: 14.06.1995 FR 9507074
(43) Date de publication de la demande: 01.04.1998
(73) Titulaire: DAV, 78180 Montigny le Bretonneux (FR)
(72) Inventeur: VANHELLE, Stéphane, F-74970 Marignier (FR)
(74) Mandataire: Levy, David
(86) Numéro de dépôt international: FR9600892
(87) Numéro de publication internationale: WO9700529

(56) Documents cités:
- EP-A- 0 530 509
- DE-A- 3 238 048
- DE-C- 3 904 771
- FR-A- 2 193 241

## Description

La présente invention concerne un dispositif de réglage de positionnement de sièges motorisés notamment de sièges de véhicules automobiles.

Les sièges avant d'un véhicule automobile sont réglables dans plusieurs directions. Par siège de véhicule, il faut comprendre aussi bien le siège ou assise proprement dite sur lequel est assis le conducteur ou le passager que le dossier.

Divers dispositifs de commande des différents mouvements du siège ont été proposés ou sont utilisés actuellement mais seulement dans les véhicules de gamme supérieure, en raison de leur coût notamment. De tels dispositifs sont décrits par exemple dans DE 39 04771 (KOSTAL), qui représente l'état de technique le plus proche, EP 530 509 (OMRON) et DE 33 12494 (RECARO). Ces dispositifs comprennent soit des modules commutateurs indépendants soudés sur un support tel qu'un circuit imprimé et actionnés par l'intermédiaire d'une touche de commande multi-directionnelle, soit un boîtier assemblé comportant des lames recourbées du type basculeur et qui assurent la commutation, les basculeurs étant commandés par des actionneurs qui sont liés à une touche de commande.

Ces dispositifs présentent l'inconvénient principal d'être figés dans leur conception sans possibilité d'adaptation aux nécessités ou besoins des constructeurs automobiles qui ne peuvent les utiliser que dans un mode de réalisation et/ou pour des commandes données. Par exemple, il n'est pas possible d'inhiber un ou plusieurs mouvements si cela était souhaité pour réduire le coût en vue d'une intégration dans un véhicule de gamme moyenne.

La présente invention a pour but de proposer un dispositif de réglage de positionnement d'un siège qui soit modulable en fonction de l'utilisation qui en sera faite par le constructeur automobile.

La présente invention a pour objet un dispositif de réglage de positionnement d'un siège, du type dans lequel sont montés des rupteurs, au moins un organe d'actionnement dudit rupteur et au moins une touche de commande de l'organe d'actionnement, caractérisé en ce qu'il comprend en outre un boîtier alvéolaire dans lequel est logé au moins un des rupteurs et en ce que l'organe d'actionnement est constitué par un baladeur muni d'au moins une rampe d'actionnement.

Un avantage de la présente invention réside dans le fait que les rupteurs utilisés sont indépendants les uns des autres grâce au fait qu'ils sont montés dans un boîtier alvéolaire. De plus, il est possible d'inhiber une ou plusieurs des positions du siège, par exemple la double commutation en vertical.

D'autres avantages et caractéristiques apparaîtront plus clairement à la lecture de plusieurs modes de réalisation préférés de l'invention, ainsi que des dessins annexés sur lesquels :
- la figure 1 est une vue éclatée du dispositif selon l'invention, avec certaines parties représentées également en vue de dessous et en perspective,
- la figure 2 est une coupe verticale du baladeur représenté,
- la figure 3 est une vue de dessous en perspective du baladeur de la figure 2,
- les figures 4 et 4a sont des vues en coupe du palonnier représenté sur la figure 1, dans une position de contact et au repos respectivement,
- les figures 5, 5a et 5b sont des représentations schématiques de divers mouvements autorisés dans un module 3 axes,
- la figure 6 est une vue de dessus d'un autre mode de réalisation de l'invention,
- la figure 7 est une vue en coupe selon VII-VII de la figure 6.

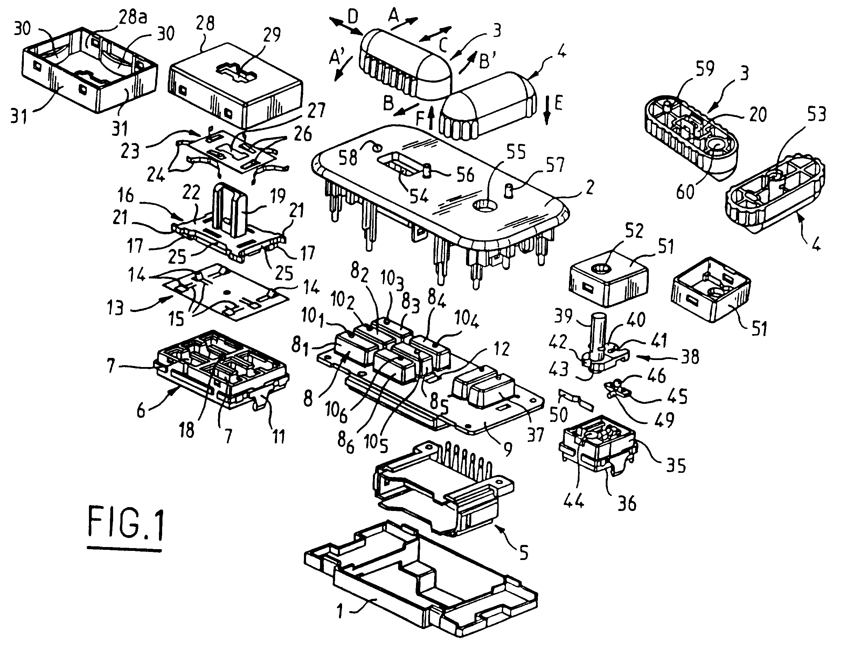

Le dispositif représenté sur la figure 1 est destiné au réglage de position de l'assise et du dossier d'un siège d'un véhicule automobile, la commande de position de l'assise étant indépendante de celle relative au dossier ; de ce fait, on pourrait prévoir des commandes de position distinctes si cela s'avérait être nécessaire.

Le dispositif comprend un capot inférieur 1 et un plastron supérieur 2 formant couvercle pour le capot et sur lequel sont montés une touche de commande 3 pour le réglage de position de l'assise de siège et une touche de commande 4 pour le réglage de position du dossier de siège. Les touches de commande 3 et 4 sont représentées en vue de dessus et en vue de dessous au centre et sur la partie droite de la planche de la figure 1 respectivement.

Dans le capot inférieur 1 est également monté un ensemble de connexion électrique 5, connu en soi et qui ne sera pas décrit dans le détail.

L'ensemble de commande pour le réglage de position de l'assise comprend un boîtier alvéolaire 6 comportant autant d'alvéoles 7 que de rupteurs, par exemple au nombre de six et référencés 8₁ à 8₆, nécessaires au positionnement de ladite assise, non représentée, lesdits rupteurs 8₁ à 8₆ étant montés sur un circuit imprimé 9 et comportant chacun un contact mobile du type à piston, les contacts étant référencés 10₁ à 10₆. Le boîtier alvéolaire 6 est monté par le dessus de façon à permettre aux rupteurs 8 de se loger dans les alvéoles correspondantes, des pattes élastiques 11 étant insérées dans des orifices 12 dont un seul est visible sur la figure 1, et ménagées dans le circuit imprimé 9, pour assurer la liaison entre lesdits boîtier alvéolaire 6 et circuit imprimé 9. Le boîtier alvéolaire 6 comprend, en son centre, un téton 18 dont la fonction sera décrite ultérieurement.

Dans une plaque métallique dite lame d'actionneur 13 sont découpées et pliées en partie vers le haut des bras souples 14 dont les parties horizontales 15 sont en appui constant sur les contacts 10₁ à 10₆ des rupteurs 8, de manière à permettre une coopération avec lesdits contacts. Les bras souples 14, par leur déformation, rattrapent les jeux éventuels entre ladite lame d'actionnement 13 et lesdits contacts 10₁ à 10₆ et permettent également de transformer les efforts transversaux de la lame d'actionnement 13 en des efforts verticaux sur les contacts 10₁ à 10₆ des rupteurs 8, dans le but de ne pas détériorer le module de commutation.

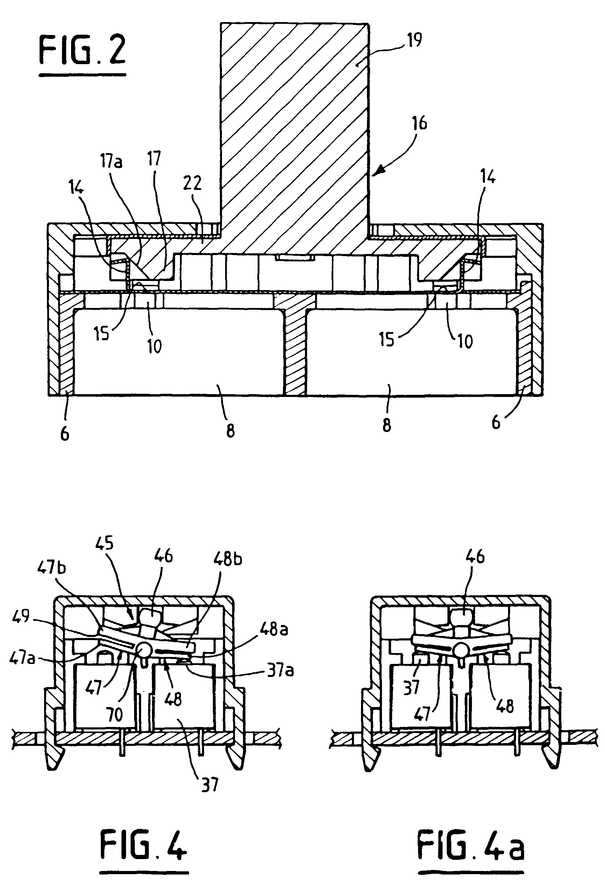

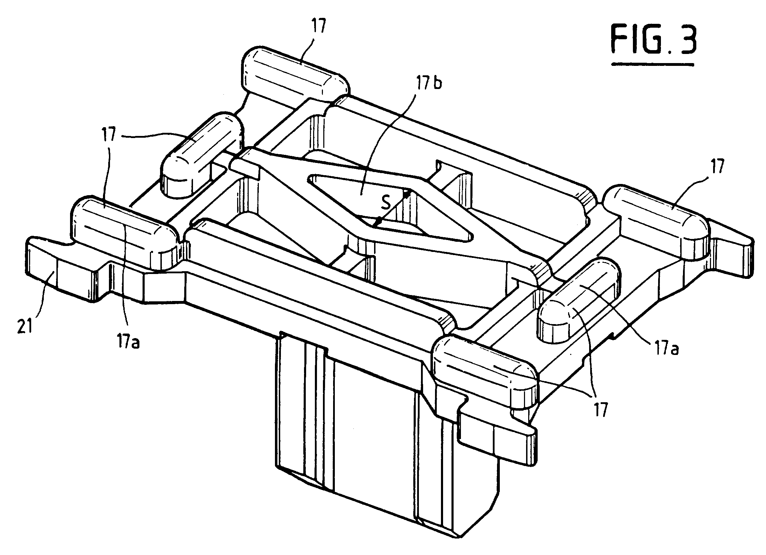

Un baladeur 16 constituant un organe d'actionnement est monté au-dessus de la lame d'actionnement 13 et comprend sur la face de dessous des rampes d'actionnement 17 coopérant avec les bras souples 14 (figures 2 et 3). Chaque rampe 17 comporte de préférence une partie du type hémisphérique en contact avec le bras 14 correspondant de la lame d'actionnement 13, ledit bras 14 présentant une inclinaison qui dépend des caractéristiques des courses de manoeuvre et d'actionnement ainsi qu'éventuellement des efforts à transmettre. De préférence, l'inclinaison du bras 14 est comprise entre 20 et 45°.

Le baladeur 16 comprend un organe de manoeuvre ou tige 19 qui se loge dans un espace 20 ménagé à cet effet dans la touche de commande 3, ainsi que des butées mécaniques 21 ménagées aux quatre coins de la base 22 du baladeur 16. Un évidement 17b, par exemple en forme de losange, est ménagé sur la face interne de la base 22 et reçoit le téton 18 du boîtier alvéolaire 6. Les dimensions de l'évidement 17b peuvent être choisies de sorte qu'une direction de déplacement du baladeur soit inhibée. Si on souhaite ne pas autoriser la montée ou la descente du siège, on choisira, dans le cas de l'évidement en forme de losange, une longueur S de la petite diagonale telle que S/₂ est inférieure à la course de commutation du baladeur 16.

Une lame 23 de rappel, constituée à partir d'une feuille mince correctement découpée, comprend sur les quatre côtés latéraux des bras souples 24 en forme sensiblement d'un V ou d'un C qui sont disposés dans des échancrures 25 ménagées à cet effet sur les côtés latéraux de la plaque 22 du baladeur 16. Des bras souples 26 sont réalisés dans la lame 23 par découpe et léger pliage vers le haut. Un passage 27 est ménagé dans la lame 23 pour le passage de la tige de manoeuvre 19 du baladeur 16. Un couvercle 28 pourvu d'un passage 29 pour la tige 19 comporte des rampes 30 sur les faces internes 28a des quatre côtés latéraux 31 du couvercle, deux des quatre rampes 30 étant représentées sur la figure 1. Les rampes 30 coopèrent par coulissement avec les bras souples 24 de la lame de rappel 23 pour ramener l'ensemble mobile en position initiale, tandis que les bras souples 26 sont destinés à compenser les jeux mécaniques entre le baladeur 16 et le couvercle 28.

La forme, par exemple en H, et les dimensions du passage 29 sont choisies de sorte que le baladeur 16 puisse se déplacer suivant les directions A à D de la touche de commande 3.

Les parois internes 28a des côtés latéraux 31 constituent des arrêts mécaniques pour les butées 21 du baladeur 16.

Une particularité importante de la présente invention réside dans le fait que quel soit l'effort exercé sur la touche de commande 3, l'effort transmis verticalement sur chacun des contacts 10₁ à 10₆ reste intact et égal à une valeur prédéterminée, par exemple de l'ordre de 6N. En effet, grâce à la butée mécanique du baladeur 16 sur les parois internes 28a du couvercle 28, seule une partie de l'effort exercé sur la touche de commande est transmise par le baladeur 16 aux bras souples 14 de la lame d'actionnement 13. De plus, le dimensionnement desdits bras souples ainsi que ses propriétés mécaniques telles que flexion, module et autre moment d'inertie sont choisis de sorte que pour une force F exercée verticalement en bout d'un bras souple 14, l'effort total exercé sur chacun des rupteurs reste constant par application des lois et formules de résistance des matériaux, non décrites car bien connues des spécialistes en la matière.

Dans le mode de réalisation décrit et pour un exemple d'application, on peut vérifier par le calcul que pour un bras souple présentant les caractéristiques suivantes :
Longueur (L) = 10 mm ; largeur (l) = 2 mm ; épaisseur (e) = 0,25 mm ; flèche (f) = 1 mm ; module d'élasticité (Y) = 190 000 N/mm² ; force (Fₜₖ) à exercer sur un contact = 5N du rupteur considéré ; la force totale à l'extrémité du bras est T_{T} = F_{R} + F≈6N où F_{R} est la force ramenée au bout du bras et F la force ayant produit la flèche f.

Un ensemble mobile de commande de réglage de position d'un dossier de siège est également prévu dans le dispositif selon l'invention mais il est limité à un module deux axes car, dans la majorité des cas, il est nécessaire d'incliner vers l'arrière le dossier ou de le ramener vers l'avant.

L'ensemble comprend un boîtier alvéolaire 35 comprenant deux alvéoles 36 pour le logement de deux rupteurs 37 identiques aux rupteurs 8 et montés sur le circuit imprimé 9. L'organe d'actionnement est constitué non pas par le baladeur décrit précédemment mais par un actionneur 38 comprenant une tige verticale 39 et une base 40 dans laquelle sont ménagés un orifice oblong 41 et une came 42, la partie inférieure 43 de la tige verticale 39 étant logée dans un logement 44 ménagé dans le boîtier alvéolaire 35.

Un palonnier 45 est également monté dans le boîtier 35, comme cela est représenté sur les figures 4 et 4a et présente la même fonction que la lame d'actionneur 13 précédemment décrite. Le palonnier 45 comprend une rotule 46 qui est disposée dans l'orifice oblong 41 de l'actionneur 38 et deux paires de bras 47 et 48, les deux bras 47a et 47b ou 48a et 48b de chaque paire étant séparés par une fente 49. Les bras 47a et 48a sont susceptibles de se rapprocher des bras respectifs 47b et 48b en fonction de la position du palonnier 45, comme représenté sur les figures 4 et 4a sur lesquels le palonnier a basculé autour d'un axe de pivotement 70 pour actionner le piston 37a du rupteur 37 de droite (figure 4) ou il est en position de repos (figure 4a), aucun des rupteurs 37 n'étant actionné dans cette position.

Une lame de rappel 50 de l'actionneur 38 de forme correspondante à la came 42 est logée dans cette dernière et elle est montée fixe dans le couvercle 51 qui est pourvu d'un passage 52 pour la tige 39 et qui s'emboîte sur le boîtier 35 pour protéger les diverses pièces de l'ensemble mobile. La tige 39 est reçue et bloquée par des moyens appropriés dans un logement 53 de la touche de commande 4.

Le plastron 2 formant couvercle pour le dispositif selon l'invention est muni de deux orifices appropriés 54 et 55 pour le passage respectivement des tiges 19 et 39. Le plastron 2 peut également comprendre des tétons 56, 57 ou des orifices comme par exemple l'orifice 58, coopérant avec des orifices ou des tétons prévus dans la touche de commande 3, comme le téton 59 qui se loge dans l'orifice 58 alors que le téton 57 se loge dans l'évidement 60. Bien évidemment, on peut inverser ces organes et prévoir des tétons sur la touche de commande 3 et des orifices sur le plastron 2.

Lorsqu'on souhaite avancer ou reculer le siège on déplace la touche de commande 3 à gauche ou à droite suivant la direction de la double flèche D, les rupteurs actionnés par le baladeur 16 qui est entraîné par ladite touche de commande, étant les rupteurs médians 10₂ ou 10₅ qui sont affectés à cette fonction d'avance ou de recul du siège.

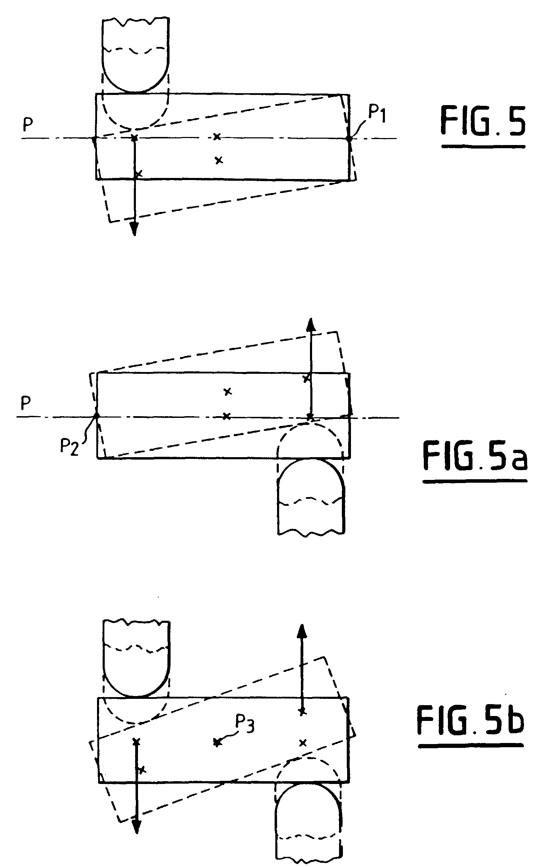

Sur les figures 5 à 5b on a représenté schématiquement trois des possibles mouvements du siège. Pour effectuer une descente avant du siège (figure 5), on exerce une pression sur une extrémité de la touche de commande 3, dans le sens de la flèche A', le centre de pivotement étant situé sur l'axe P et approximativement près du point P₁. Dans ce cas, seul le rupteur 10₁ est commuté. Grâce à la butée mécanique réalisée par le contact de la butée 21 correspondante sur la paroi interne 28a en regard du couvercle 28, aucun couple antagoniste n'est créé à l'autre extrémité de ladite touche de commande 3 et on est ainsi assuré que le rupteur 10₆ n'est pas commuté. La montée arrière (figure 5a) du siège est effectuée par pression sur l'autre extrémité de la touche de commande 3 suivant la flèche B', le centre de pivotement étant approximativement autour du point P₂ sur l'axe P.

Des efforts exercés suivant les flèches A et B produisent des mouvements inverses c'est-à-dire une montée de l'avant du siège ou une descente de l'arrière du siège, les rupteurs commutés étant alors 8₃ ou 8₄.

Lorsqu'on désire combiner deux mouvements du siège, on exerce simultanément une pression aux deux extrémités de la touche de commande qui pivote autour d'un centre de pivotement P₃ situé à l'intérieur. Dans ce cas, les deux rupteurs 8₃ et 8₅ ou 8₁ et 8₄ sont commutés par le baladeur 16.

Une montée ou une descente du siège, parallèlement au plancher ou à une quelconque position antérieure est assurée par le déplacement de la touche de commande 3 dans la direction de la double flèche C, un sens étant réservé à la montée par exemple par commutation des rupteurs 8₃ et 8₄, l'autre étant réservé à la descente par commutation des rupteurs 8₁ et 8₆. Les rupteurs restent commutés jusqu'au positionnement en hauteur souhaité. Dans n'importe quelle position du siège, il est possible, comme décrit précédemment, de positionner correctement l'avant et/ou l'arrière du siège.

Il est également possible d'interdire un ou plusieurs des mouvements décrits ci-dessus. Par exemple, la présence du téton 18 sur le boîtier alvéolaire 6 interdit la montée avant et la descente arrière du siège, alors que le réglage simultané de l'avant et de l'arrière du même siège est autorisé.

De même, la présence ou l'absence de téton 59 sur la touche de commande 3 interdit ou autorise certaines positions du siège. C'est ainsi que le téton 59 disposé dans l'orifice 58 interdit les mouvements de la touche de commande 3 suivant les flèches A et A' et les doubles flèches C et D alors que les mouvements suivant les flèches B et B' sont autorisés.

Le réglage de la position du dossier d'un siège est effectué par la touche de commande 4 qui pivote autour d'un axe de pivotement, de manière à autoriser l'inclinaison dudit dossier entre deux limites prédéterminées. Ce réglage est effectué par la commutation de l'un ou l'autre des rupteurs 37, la commutation simultanée des deux rupteurs n'étant pas possible.

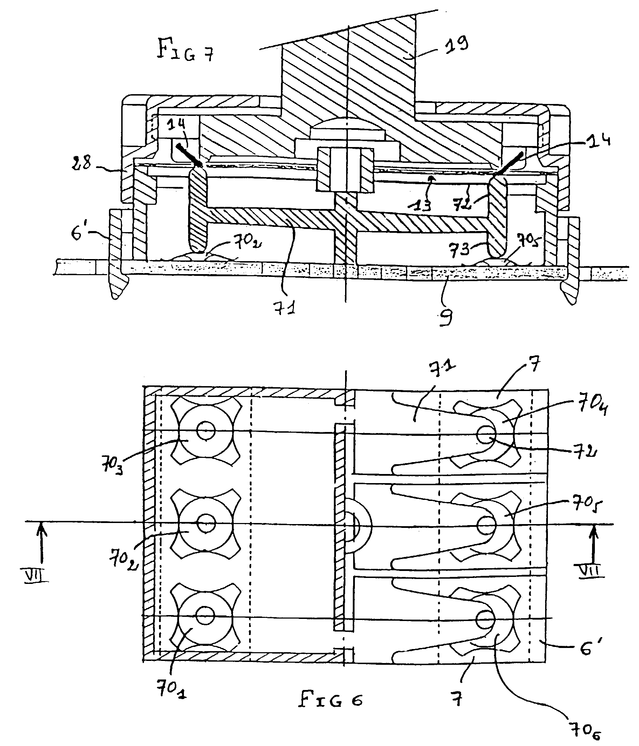

Selon une autre variante représentée sur les figures 6 et 7, il est possible de remplacer les rupteurs 8₁ à 8₆ par des cloquants 70₁ à 70₈. Pour ce faire, on remplace le boîtier alvéolaire 6 par un autre boîtier alvéolaire 6' dans les alvéoles duquel sont disposés les cloquants 70₁ à 70₆. Dans le boîtier 6' et, de préférence venu de moulage avec ledit boîtier, on réalise un organe d'actionnement intermédiaire 71 qui comporte autant de paires de pions d'actionnement qu'il y a de cloquants. Chaque paire de pions comprend un pion supérieur 72 qui coopère avec un bras souple 14 de la lame d'actionneur 13 et un pion inférieur 73 qui coopère avec le cloquant associé. Les cloquants 70₁ à 70₈ sont montés sur les pistes conductrices du type gravure de circuit imprimé.

Les cloquants sont intéressants lorsqu'on souhaite passer de faibles courants et ils peuvent se présenter sous la forme de coupelles métalliques, en acier avec ou sans traitement de surface, ou en silicone avec des pastilles conductrices, par exemple en carbone.

## Revendications

1. Dispositif de réglage de positionnement d'un siège du type comprenant un corps de boîtier constitué par une partie formant couvercle (28, 51) et une partie de fond (1), un circuit imprimé (9) disposé dans ledit corps et sur lequel sont montés des rupteurs (8, 37), au moins un organe d'actionnement (16, 38) desdits rupteurs et au moins une touche (3, 4) de commande de l'organe d'actionnement, caractérisé en ce qu'il comprend en outre un boîtier alvéolaire (6, 35) dans lequel est logé au moins un des rupteurs (8, 37) et en ce que l'organe d'actionnement est constitué par un baladeur (16, 38) muni d'au moins une rampe d'actionnement (17).

2. Dispositif selon la revendication 1, caractérisé en ce que le baladeur (16) comprend autant de rampes (17) d'actionnement que de rupteurs (8) disposés dans le boîtier alvéolaire (6) et en ce qu'une lame souple de rappel (23) est interposée entre le couvercle (28) et le baladeur (16), ladite lame souple (23) coopérant avec des rampes de positionnement (30) prévues dans ledit couvercle pour ramener le baladeur dans une position initiale de repos.

3. Dispositif selon la revendication 2, caractérisé en ce que la lame souple (23) comprend, en partie supérieure, des pattes élastiques (26) pour compenser des jeux mécaniques entre le baladeur (16) et le couvercle 28).

4. Dispositif selon la revendication 1 ou 2, caractérisé en ce qu'une lame (13) de transmission d'efforts est interposée entre le baladeur (16) et le boîtier alvéolaire (6), ladite lame (13) comportant des bras souples inclinés (14) coopérant avec les rampes (17) du baladeur et les rupteurs (8), pour transformer les efforts transversaux du baladeur en efforts verticaux sur les rupteurs.

5. Dispositif selon la revendication 4, caractérisé en ce que les rampes (17) présentent au moins une partie hémisphérique (17a).

6. Dispositif selon la revendication 1, caractérisé en ce que le baladeur (16) est constitué par un actionneur (38) et un palonnier (45), ledit actionneur (38) étant pourvu, d'une part, d'un axe de transformation (39) de mouvements de la touche de commande (4) et, d'autre part, d'un orifice oblong (41) dans lequel est logé une rotule (46) du palonnier (45) qui comprend également un axe de pivotement (49) et deux leviers d'actionnement (47, 48).

7. Dispositif selon la revendication 6, caractérisé en ce que le palonnier (45) comprend en outre des ailettes souples de rattrapage de jeu qui sont interposées entre un rupteur et les leviers d'actionnement.

8. Dispositif selon la revendication 6, caractérisé en ce que l'actionneur comprend une came (42) de positionnement au repos et dans laquelle est logée une lame élastique de rappel (50).

9. Dispositif selon l'une des revendications précédentes, caractérisé en ce qu'il comprend des moyens d'inhibition (18, 56, 57, 58) d'un ou plusieurs réglages de positionnement du siège.

10. Dispositif selon la revendication 9, caractérisé en ce que les moyens d'inhibition sont constitués par un téton (18) monté sur le boîtier (6) et qui se loge dans un évidement (17b) ménagé dans la face inférieure du baladeur (16).

11. Dispositif selon la revendication 9, caractérisé en ce que les moyens d'inhibition sont constitués par un téton (59) prévu dans la touche de commande (3) et s'insérant dans un orifice (58) ménagé dans un plastron (2) formant couvercle général pour le dispositif.

12. Dispositif selon l'une des revendications précédentes, caractérisé en ce que l'effort transmis verticalement à chacun des rupteurs (8₁ à 8₆) est constant et de valeur prédéterminée, d'environ 6N.

13. Dispositif selon la revendication 1 ou 4, caractérisé en ce que le boîtier alvéolaire (6') comprend un organe d'actionnement intermédiaire (71) comprenant des pions d'actionnement (72, 73) qui coopèrent avec les bras souples (14) de la lame d'actionnement (13) et les rupteurs.

14. Dispositif selon la revendication 1 ou 13, caractérisé en ce que les rupteurs sont constitués par des cloquants (70₁ à 70₆) montés sur des pistes conductrices du circuit imprimé (9).

15. Dispositif selon la revendication 14, caractérisé en ce que les cloquants (70₁ à 70₆) sont en silicone avec pastilles conductrices.

## Patentansprüche

1. Vorrichtung zum Einstellen der Positionierung eines Sitzes, des Typs, der versehen ist mit einem Gehäusekörper, der durch einen einen Deckel (28, 51) bildenden Teil und einen Bodenteil (1) gebildet ist, einer gedruckten Schaltung (9), die in dem Körper angeordnet ist und auf der Unterbrecher (8, 37) angeordnet sind, wenigstens einem Betätigungselement (16, 38) der Unterbrecher, und wenigstens einer Steuertaste (3, 4) des Betätigungselements, dadurch gekennzeichnet, daß sie außerdem ein zellenförmiges Gehäuse (6, 35) enthält, in dem wenigstens einer der Unterbrecher (8, 37) untergebracht ist, und daß das Betätigungselement durch eine Wippe (16, 38) gebildet ist, die mit wenigstens einer Betätigungsrampe (17) versehen ist.

2. Vorrichtung nach Anspruch 1, dadurch gekennzeichnet, daß die Wippe (16) so viele Betätigungsrampen (17) wie im zellenförmigen Gehäuse (6) angeordnete Unterbrecher (8) enthält und daß zwischen den Deckel (28) und die Wippe (16) ein elastisches Rückstellplättchen (23) eingefügt ist, wobei das elastische Plättchen (23) mit im Deckel vorgesehenen Positionierungsrampen (30) zusammenwirkt, um die Wippe in eine Anfangsruhestellung zurückzustellen.

3. Vorrichtung nach Anspruch 2, dadurch gekennzeichnet, daß das elastische Plättchen (23) im oberen Teil elastische Haken (26) enthält, um ein jeweiliges mechanisches Spiel zwischen der Wippe (16) und dem Deckel (28) zu kompensieren.

4. Vorrichtung nach Anspruch 1 oder 2, dadurch gekennzeichnet, daß zwischen die Wippe (16) und das zellenförmige Gehäuse (6) ein Kraftübertragungsplättchen (13) eingefügt ist, wobei das Plättchen (13) geneigte elastische Arme (14) enthält, die mit den Rampen (17) der Wippe und mit den Unterbrechern (8) zusammenwirken, um die transversalen Kräfte der Wippe in vertikale Kräfte auf die Unterbrecher umzuformen.

5. Vorrichtung nach Anspruch 4, dadurch gekennzeichnet, daß die Rampen (17) wenigstens einen halbkugelförmigen Teil (17a) aufweisen.

6. Vorrichtung nach Anspruch 1, dadurch gekennzeichnet, daß die Wippe (16) durch eine Betätigungseinrichtung (38) und einen Träger (45) gebildet ist, wobei die Betätigungseinrichtung (38) versehen ist einerseits mit einer Achse (39) zur Umformung der Bewegungen der Steuertaste (4) und andererseits mit einer länglichen Öffnung (41), in der eine Kugel (46) des Trägers (45) untergebracht ist, der außerdem eine Schwenkachse (49) und zwei Betätigungshebel (47, 48) enthält.

7. Vorrichtung nach Anspruch 6, dadurch gekennzeichnet, daß der Träger (45) außerdem elastische Spielverringerungsflügel enthält, die zwischen einen Unterbrecher und die Betätigungshebel (47, 48) eingefügt sind.

8. Vorrichtung nach Anspruch 6, dadurch gekennzeichnet, daß die Betätigungseinrichtung einen Ruhepositionierungsnocken (42) enthält, in dem ein elastisches Rückstellplättchen (50) untergebracht ist.

9. Vorrichtung nach einem der vorangehenden Ansprüche, dadurch gekennzeichnet, daß sie Mittel zum Sperren (18, 56, 57, 58) einer oder mehrerer Sitzpositionierungseinstellungen enthält.

10. Vorrichtung nach Anspruch 9, dadurch gekennzeichnet, daß die Sperrmittel durch einen Ansatz (18) gebildet sind, der am Gehäuse (6) angebracht ist und der sich in einer Aussparung (17b) befindet, die in der unteren Fläche der Wippe (16) ausgebildet ist.

11. Vorrichtung nach Anspruch 9, dadurch gekennzeichnet, daß die Sperrmittel durch einen Ansatz (59) gebildet sind, der in der Steuertaste (3) vorgesehen und in eine Öffnung (58) eingeschoben ist, die in einem Schild (2) ausgespart ist, der den allgemeinen Deckel für die Vorrichtung bildet.

12. Vorrichtung nach einem der vorangehenden Ansprüche, dadurch gekennzeichnet, daß die auf jeden der Unterbrecher (8₁ bis 8₆) vertikal übertragene Kraft konstant ist und einen vorgegebenen Wert von ungefähr 6 N besitzt.

13. Vorrichtung nach Anspruch 1 oder 4, dadurch gekennzeichnet, daß das zellenförmige Gehäuse (6') ein Zwischenbetätigungselement (71) enthält, das Betätigungshöcker (72, 73) enthält, die mit den elastischen Armen (14) des Betätigungsplättchens (13) und mit den Unterbrechern zusammenwirken.

14. Vorrichtung nach Anspruch 1 oder 13, dadurch gekennzeichnet, daß die Unterbrecher durch Blasen (70₁ bis 70₆) gebildet sind, die auf Leiterbahnen der gedruckten Schaltung (9) angebracht sind.

15. Vorrichtung nach Anspruch 14, dadurch gekennzeichnet, daß die Blasen (70₁ bis 70₆) aus Silicium bestehen und leitende Anschlußflächen besitzen.

## Claims

1. Seat position adjustment device including a housing having a cover part (28, 51) and a base part (1), a printed circuit (9) disposed in said housing and on which are mounted microswitches (8, 37), at least one actuating member (16, 38) for actuating said microswitches and at least one control button (3, 4) for controlling the actuating member, and characterized in that it further comprises a cellular housing (6, 35) accommodating at least one of the microswitches (8, 37) and in that the actuating member is a yoke (16, 38) having at least one actuating projection (17).

2. Device according to claim 1 characterized in that the yoke (16) comprises as many actuating projections (17) as there are microswitches (8) disposed in the cellular housing (6) and in that a flexible return leaf spring (23) is disposed between the cover (28) and the yoke (16), said flexible leaf spring (23) cooperating with positioning projections (30) in said cover to return the yoke to an initial rest position.

3. Device according to claim 2 characterized in that the flexible leaf spring (23) has elastic lugs (26) in its upper part to compensate mechanical play between the yoke (16) and the cover (28).

4. Device according to claim 1 or claim 2 characterized in that a force transmitting leaf spring (13) is disposed between the yoke (16) and the cellular housing (6), said leaf spring (13) having inclined flexible arms (14) cooperating with the projections (17) of the yoke and the microswitches (8) to convert transverse forces on the yoke into vertical forces on the microswitches.

5. Device according to claim 4 characterized in that the projections (17) have at least one hemispherical part (17a).

6. Device according to claim 1 characterized in that the yoke (16) comprises an actuator (38) and a swing-arm (45), said actuator (38) having a control button (4) movement conversion axis (39) and an oblong orifice (41) accommodating a ball-joint (46) of the swing-arm (45) which also has a pivot axis (49) and two actuating levers (47, 48).

7. Device according to claim 6 characterized in that the swing-arm (45) further includes flexible fins for taking up play disposed between a microswitch and the actuating levers.

8. Device according to claim 6 characterized in that the actuator includes a rest position cam (42) accommodating an elastic return leaf spring (50).

9. Device according to any one of the preceding claims characterized in that it includes means (18, 56, 57, 58) for disabling one or more seat position adjustments.

10. Device according to claim 9 characterized in that the disabling means comprise a stud (18) on the housing (6) accommodated in a recess (17b) in the bottom face of the yoke (16).

11. Device according to claim 9 characterized in that the disabling means comprise a stud (59) on the control button (3) inserted in an orifice (58) in a shield (2) forming a general cover for the device.

12. Device according to any one of the preceding claims characterized in that the force transmitted vertically to each of the microswitches (8₁ through 8₆) is constant and of predetermined value, approximately 6 N.

13. Device according to claim 1 or claim 4 characterized in that the cellular housing (6') includes an intermediate actuating member (71) including actuating pins (72, 73) that cooperate with the flexible arms (14) of the actuating leaf spring (13) and the microswitches.

14. Device according to claim 1 or claim 13 characterized in that the microswitches are membrane switches (70₁ through 70₆) mounted on conductive tracks of the printed circuit (9).

15. Device according to claim 14 characterized in that the membrane switches (70₁ through 70₆) are of silicone with conductive pads.
